Europäisches Patentamt

(19) European Patent Office　　　(11) Numéro de publication: **0 017 996**

Office européen des brevets　　　　　　　　　　**B1**

⑫　　　　　　　**FASCICULE DE BREVET EUROPEEN**

(45) Date de publication du fascicule du brevet: **11.01.84**　　(51) Int. Cl.³: **B 29 D 23/05, B 32 B 31/30**

(21) Numéro de dépôt: **80102098.3**

(22) Date de dépôt: **18.04.80**

(54) Procédé et appareil pour l'extrusion de pellicules tubulaires feuilletées, avec armature intérieure de renfort.

(30) Priorité: **24.04.79 IT 2212479**

(43) Date de publication de la demande:
**29.10.80 Bulletin 80/22**

(45) Mention de la délivrance du brevet:
**11.01.84 Bulletin 84/2**

(84) Etats contractants désignés:
**DE FR GB NL SE**

(56) Documents cités:
**DE - A - 1 504 588**
**FR - A - 2 143 809**

(73) Titulaire: **Dolci, Lanfranco**
**Via Zucchi, 18**
**I-20095 Cusano Milanino (Milano) (IT)**

(72) Inventeur: **Dolci, Lanfranco**
**Via Zucchi, 18**
**I-20095 Cusano Milanino (Milano) (IT)**

(74) Mandataire: **Racheli, Adele**
**ING. A. RACHELI & C. Viale San Michele del Carso 4**
**I-20144 Milano (IT)**

Courier Press, Leamington Spa, England.

Procédé et appareil pour l'extrusion de pellicules tubulaires feuilletées,
avec armature intérieure de renfort

La présente invention a trait à un procédé et à un appareil pour l'extrusion de pellicules tubulaires feuilletées, comportant une armature intérieure de renfort, dans lequel une couche tubulaire intérieure et une couche tubulaire extérieure sont extrudées concentriquement au moyen de filières et dans lequel l'armature de renfort est formée entre les couches tubulaires par des fils de renforts formant treillis par rotation des bobines desquels ils sont déroulés, des forces étant ensuite développées perpendiculairement sur les couches tubulaires pour les souder l'une à l'autre et à l'armature intérieure. On emploi ces pellicules pour la fabrication de sacs industriels, de shoppers, de coffrets, de bannes ou de bâches de couverture ou de recouvrement et similaires, c'est à dire où il est nécessaire d'avoir une structure en mesure de supporter des charges relativement élevées dans le sens axial et/ou dans le sens radial par rapport au tubue.

On sait que dans la production de ces produits on a recours d'habitude à la production de pellicules séparées qui sont ensuite couplées l'une à l'autre au moyen d'adhésifs avec l'interposition d'un filet de support.

Ce procédé est sans doute très coûteux et compliqué. On a donc tenté de produire la pellicule feuilletée renforcée par une seule opération, (DE—A—1504588). Cette réalisation prévoit des moyens de pression qui s'appuient sur une couronne de calibrage contre la quelle les couches devraient glisser. Cette réalisation produit dans la pellicule feuilletée des forces axiales dues au frottement, ce qui empêche l'écoulement régulier de la pellicule. Cela est augmenté du fait qu'à ce stade de formation la pellicule encore chaude est très collante. D'autre part, la liaison entre les deux couches est difficile par ce que les fils du treillis de renfort, sont soumis non seulement a une tension, mais aussi à une torsion due à la rotation des bobines pour créer le treillis.

De la demande de brevet française 2.143.809 on connaît l'emploi de souffles d'air opposés, mais cela a été utilisé seulement pour le refroidissement d'une pellicule tubulaire.

Le but de la présente invention est par contre de réaliser un procédé et un appareil pour la production d'une pellicule tubulaire renforcée, où les différentes couches adhèrent parfaitement l'une à lautre, cela en évitant les inconvénients de la technique antérieure.

Selon l'invention, le problème a été résolu comme décrit dans les revendications 1 et 2.

L'invention sera mieux décrite ci-après en se rapportant aux figures annexées, où:

La Figure 1 représente une vue en coupe longitudinale d'un appareil pour l'extrusion de pellicules tubulaires feuilletées avec une armature intérieure de renfort, selon la présente invention;

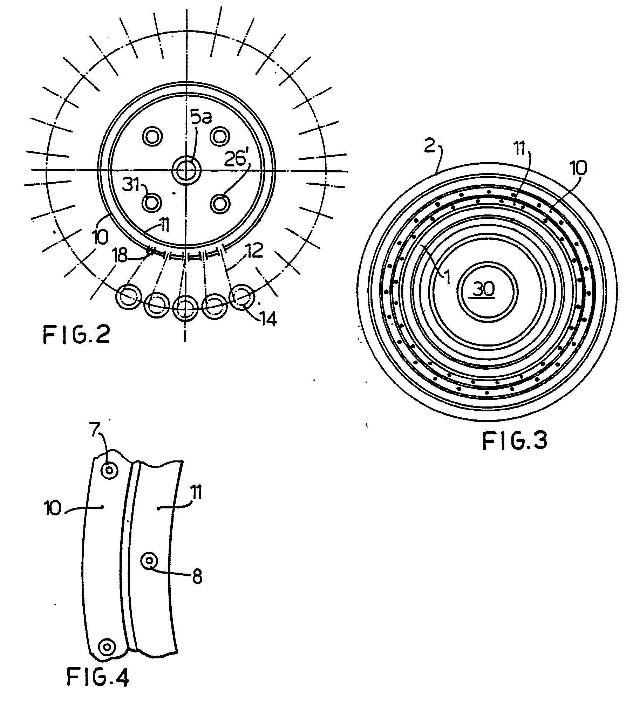

la Figure 2 représente une coupe transversale plus petite faite selon la ligne 2—2 de la Figure 1;

la Figure 3 représente une vue, aussi plus petite, des filières en regardant du côté de l'extrusion.

la Fig. 4 représente un détail agrandi de la figure 2.

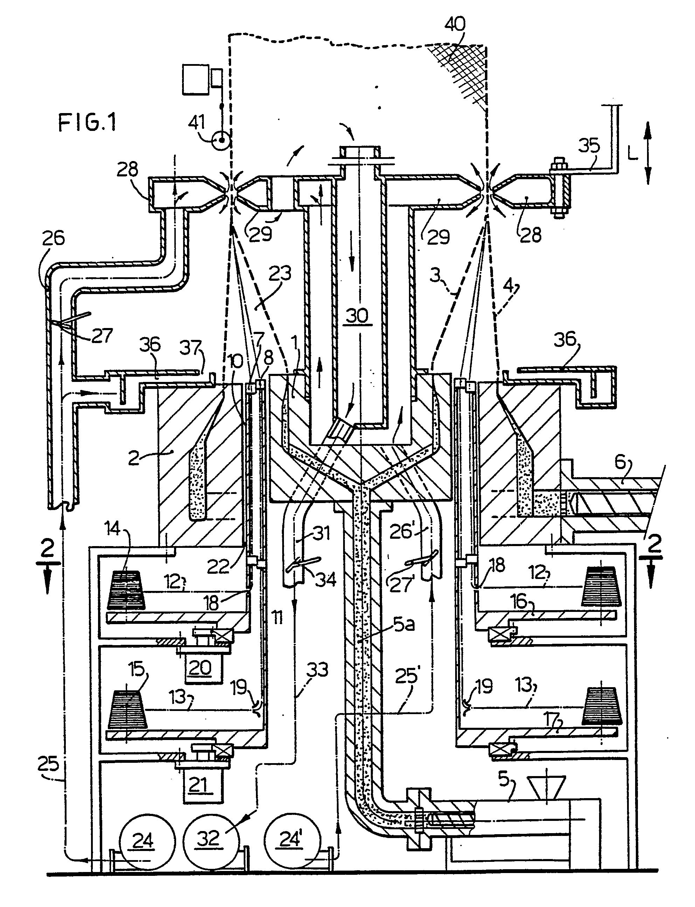

Comme représenté à la Figure 1, l'appareil comporte deux filières concentriques 1 et 2 pour l'extrusion simultanée et coaxiale d'une première couche tubulaire intérieure 3 et d'une seconde couche tubulaire extérieure 4, comme représenté. La filière intérieure 1 est alimentée à travers un tube 5a par une extrudeuse 5, tandis que la filière extérieure 2 est alimentée par une extrudeuse horizontale 6 placée latéralement, comme schématiquement représenté. Comme on remarquera, l'extrusion s'effectue du bas vers le haut.

En outre, la matière extrudée dans ce cas spécifique est le polythène.

L'appareil comporte en outre un ou plusieurs dispositifs pour l'alimentation et le guidage d'une pluralité de fils 12, 13, destinés à constituer une armature intérieure de renfort de la pellicule tubulaire feuilletée produite; les fils sont distribués circonférentiellement et ils sont disposés entre une couche et lautre de matière plastique, directement au cours de l'extrusion desdites couches tubulaires 3 et 4.

En particulier, dans l'exemple représenté sur la Figure 1, et comme représenté sur les vues particulières des autres figures, l'appareil comporte deux couronnes concentriques 10 et 11 comportant les passages 7 et 8 pour les fils de renfort 12 et respectivement 13 qui se placent circonférentiellement et concentriquement entre la filière intérieure 1 et la filière extérieure 2. Le parcours des fils a été représenté par des traits pointillés.

Les fils sont déroulés d'une pluralité de bobines 14 et respectivement 15 placés circonférentiellement sur une première table tournante 16 et respectivement sur une seconde table tournante 17 au-dessous de la précédente. Les tables 16 et 17 sont supportées de façon tournante avec les passages 7 et respectivement 8, constitués pour le cas spécifique par des éléments tubulaires qui, à leur extrémité inférieure, présentent une couronne d'éléments guide-fil 18 et respectivement 19 à travers lesquels peuvent pénétrer radialement les fils 12 et 13 pour être ensuite fait dévier vers le haut.

Les tables 16 et 17 de support des bobines peuvent être fait tourner séparément ou ensemble par des moteurs de commande indépendants 20 et 21, comme représenté, ou par l'intermédiaire de transmissions d'un seul moteur de commande.

Extérieurement et concentriquement aux couronnes 10 et 11 et aux passages 7 et 8 de guide des fils, on a formé un troisième passage circonférentiel 22 qui, de la même façon des premiers, s'ouvre dans l'espace 23 existant entre les tubulaires 3 et 4 à la proximité des têtes d'extrusion; le passage 22 est relié, à travers une tubulure (non représentée), à un aspirateur pour l'aspiration continue de l'air qui, différemment, resterait pris et renfermé entre les tubulaires 3 et 4 après que ceux-ci ont adhérés entre eux.

Si l'on désire, à travers le passage 22, on pourrait introduire ou arroser une substance convenable à la couche gazeuse ou liquide destinée à faciliter ou à favoriser l'adhésion entre les pellicules tubulaires 3 et 4 de matière plastique. Cela peut être avantageux puisqu'on peut réalsier des éléments tubulaires feuilletés en employant des matières thermo-plastiques de nature différente entre elles.

L'union de différentes couches de tubulaire avec les fils du filet qui vient d'être formé s'effectue, comme on peut le voir, sur le haut de la Figure 1. Sur cette figure, on voit comment une source d'air comprimé ou ventilé 24 envoie de l'air, par l'intermédiaire d'une tubulure 25 représentée schématiquement par un trait pontillé, dans une tubulure 26 qui comporte une soupape 27 qui fait parvenir cet air à une buse 28 qui souffle comme indiqué par les flèches sur la couche en voie de formation. En opposition à cette buse 28 on a prévu une buse 29 placée à l'intérieur de la pellicule tubulaire en formation qui reçoit l'air par un ventilateur ou compresseur 24'. Cet air est envoyé vers une tubulure 25', indiquée schématiquement par un trait pontillé, puis à une autre tubulure 26' reglée par une soupape 27' et enfin aux buses 29.

La buse 29 est placée en face de la buse 28. L'air envoyé à l'intérieur de la pellicule tubulaire est puis aspiré de nouveau dans le tube 30 où est créée une dépression à travers la conduite 31 qui relie ledit tube d'aspiration 30 avec un aspirateur 32 à travers une autre tubulure 33. L'aspiration est reglée par une soupape 34. Tous les circuits de l'air ont été indiqués par des flèches.

Sur la couche supérieure de la pellicule feuilletée produite, c'est-à-dire après que cette-ci est passée à travers le dispositif qui exerce la pression, constitué, par les buses 28 et 29, la pellicule est soumise au contrôle d'un tâteur 41 qui tâte la position de celle-ci et maintient l'équilibre entre les deux ventilateurs 24' et 32, façon que le diamètre de la pellicule tubulaire ne varie pas. En particulier, si le ventilateur 24' envoie trop d'air à l'intérieur de la pellicule, la tâteur 41 sent une augmentation de diamètre de la pellicule 40 en se déplaçant vers le gauche. Cela provoque un actionnement des soupapes 27' et 34 qui ramène le diamètre de la pellicule 40 à la valeur désirée.

La buse 28 est montée de préférence sur un étrier 35 qui peut être déplacé dans le sens longitudinal L par rapport au tube, de façon telle qu'on puisse régler la position de celui-ci par rapport à la buse 29.

La tubulure de refoulement 25 ou la tubulure 26 sucessive prévoient une bifurcation de façon telle que l'air peut aussi être envoyé entre le tube 36 qui se termine par une ouverture circonférentielle 37, qui est telle à fournir une quantité donnée d'air, qui a la fonction de réfroidir et de préparer la couche extérieure de la matière à l'action du dispositif qui exerce la pression sur la pellicule feuilletée.

Lors de leur formation, les deux couches 3 et 4 extrudées par les filières 1 et 2 sont écartées l'une de l'autre par les fils 12 et 13, qui de préférence forment un filet dans la pellicule 40, comme il est visible sur la partie supérieure droite de la Figure 1. Si on n'exerce pas une pression bien définie sur les parois de la pellicule, il est tout à fait improbable que la soudure entre les deux couches extérieures puisse se réaliser de façon sûre. Il faut en effet remarquer que les fils 12 et 13 empêchent l'adhésion à cause de leur même épaisseur puisqu'ils tournent sur eux-même. En outre, chaque croisement de fils destinés à former le treillis crée des zones de détachement ulterieur entre les deux couches 3 et 4. En appliquant une pression perpendiculaire à la pellicule feuilletée encore malléable, les couches se souderont entre elles en englobant le treillis.

L'application de pression par voie fluidique permet de ne développer que des pressions perpendiculaires à la surface tubulaire et évite un frottement de ces surfaces encore collantes se produisant dans les moyens de pression mécanique.

**Revendications**

1. Procédé pour l'extrusion de pellicules tubulaires feuilletées (40), comportant une armature intérieure de renfort, dans lequel une couche tubulaire intérieure (3) et une couche tubulaire extérieure (4) sont extrudées concentriquement au moyen de filières (1, 2) et dans lequel l'armature intérieure de renfort est formée entre les couches tubulaires par des fils de renforts (12, 13) formant treillis par rotation des bobines (14, 15) desquels ils sont déroulés, des forces étant ensuite développées perpendiculairement sur les couches tubulaires (3, 4) pour les souder l'une à l'autre et à l'armature intérieure, caractérisé en ce que les forces sont engendrées par deux couronnes d'air dont l'une est disposée à l'intérieur de la couche tubulaire (3) plus interne, en exerçant une pression sur celle-ci, tandis que l'autre est disposée à l'extérieure de la couche tubulaire plus extérne (4) exerçant une pression opposée à celle créée par la première couronne, de manière qu'aucun effort axial ne s'exerce sur les couches tubulaires à l'endroit des couronnes et par effet de la pression exercée sur le dites couches.

2. Appareil pour la mise en oeuvre du procédé selon la revendication 1 et destiné à réaliser l'extrusion de pellicules tubulaires feuilletées comprenant une armature interne de renfort et comportant au moins deux filières (1, 2) concentriques et au moins un dispositif pour l'alimentation et le guide d'une pluralité de fils (12, 13) qui forment un treilli entre les deux couches (3, 4), des moyens de pression étant prévus pour souder les couches l'une à l'autre et à l'armature de renfort caractérisé en ce que le moyens de pression sont constitués par deux buses annulaires (28, 29) créeant deux couronnes de souffles d'air, dont l'une est disposé à l'interieur de la couche tubulaire (3) plus interne, en exerçant une pression sur celle-ci, tandis que l'autre est disposée à l'extérieur de la couche plus externe (4) et exerce une pression opposée à celle exercée par la couronne plus interne, de manière qu'aucun effort axial ne s'exerce sur les couches tubulaires à l'endroit des couronnes et par effet de la pression exercée sur les dites couches.

## Patentansprüche

1. Verfahren zum Fließpressen von Schlauchfolien (40) mit einer inneren Verstärkungs-bewehrung, bei dem eine Innenschlau-schschicht (3) und eine Aussenschlauchschicht (4) konzentrisch mittels Düsen (1, 2) fließgepreßt werden und bei dem die innere Ver-stärkungsbewährung zwischen den Schlauch-schichten aus Verstärkungsfäden (12, 13) gebildet ist, die durch das Drehen der Spulen (14, 15) von denen die Fäden abgewickelt werden, Netze bilden, wobei anschließend senkrecht zu den Schlauchschichten (3, 4) Kräfte entwickelt werden, um die Fäden miteinander und mit der inneren Bewehrung zu verschweißen, dadurch gekennzeichnet, daß die Kräfte von zwei Luftringen erzeugt werden, wobei einer im Innern der Innenschlauchschicht (3) angeordnet ist und einen Druck auf diese Schicht ausüb, während der andere außerhalb der Außenschlauchschicht (4) angeordnet ist und einen Gegendruck zu dem vom ersten Luftring erzeugten Druck ausübt, sodaß der auf die Schichten ausgeübte Druck keine axiale Beanspruchung auf die Schlauchschichten im Bereich der Luftringe verursacht.

2. Vorrichtung zur Verwirklichung des Verfahrens nach Anspruch 1 zum Fließpressen von Schlauchfolien mit einer inneren Verstärkungsbewehrung, bestehend aus mindestens zwei konzentrischen Düsen (1, 2) und einer Zufuhr- und Führungsvorrichtung für eine Anzahl von Fäden (12, 13), die ein Netz zwischen den beiden Schichten (3, 4) bilden, wobei Druckmittel zum Schweißen der Schichten miteinander sowie an die Verstärkungsbewehrung vorgesehen sind, dadurch gekennzeichnet, daß die Druckmittel aus zwei ringförmigen Düsen (28, 29) bestehen, die zwei Luftstromringe erzeugen, wobei eine der Düsen im Innern der Innenschlauchschicht (3) angeordnet ist und einen Druck auf diese Schicht ausübt, während die andere Düse außen an der Außenschlauchschicht (4) angeordnet ist und einen Druck ausübt, der entgegengesetzt zu dem vom inneren Ring ausgeübten Druck ist, sodaß infolge der auf die Schichten ausgeübte Druck keine axiale Beanspruchung auf die Schlauchschichten im Ringbereich ausgeübt wird.

## Claims

1. A process for extruding tubular laminated films (40), comprising an internal reinforcement, wherein an inner tubular layer (3) and an outer tubular layer (4) are extruded concentrically by means of extrusion dies (1, 2), and wherein the internal reinforcement is formed within the tubular layers by reinforcement wires (12, 13) forming lattices due to rotating bobbins (14, 15), from which said wires are unwinded; forces being then exerted perpendicularly to the tubular layers (3, 4) which have to be welded one to the other and to the internal reinforcement, characterized by the fact that the forces are generated by two air rings, one of which is arranged inside of the innerest tubular layer (3), exerting a pressure thereupon, while the other is arranged externally of the outerest tubular layer (4), exerting a pressure opposed to the one created by the first ring, so that no axial stress is exerted on the tubular layers in the air ring zone and this is due to the pressure exerted on these layers.

2. An apparatus for carrying out the process according to Claim 1 and apt to extrude tubular laminated films comprising an internal reinforcement and consisting at least of two extrusion concentric dies (1, 2) and at least a feeding and guiding device for a plurality of wires (12, 13) forming a lattice between the two layers (3, 4), pressure means being provided to weld the layers one to the other and to the reinforcement, characterized by the fact that pressure means consist of two annular nozzles (28, 29) creating two rings of air blasto, one of which is arranged inside the tubular innerest layer (3), exerting a pressure thereon, while the other is arranged outside of the outerest layer (4) and exerts a pressure opposed to the one exerted by the innerest ring, so that no axial stress is exerted on the tubular layers in the ring zone and due to the pressure exerted on said layers.

FIG.1

FIG.2

FIG.3

FIG.4